# EUROPEAN PATENT SPECIFICATION

(11) **EP 3 318 740 B1**
(45) Date of publication and mention of the grant of the patent: **29.01.2020**
(21) Application number: 16831879.8
(22) Date of filing: 26.09.2016
(51) Int. Cl.: F02D 29/02, B60K 28/14, B60P 1/04, B60W 40/112, B60W 50/14, B62D 53/00, F02D 11/10, F02D 29/00

(54) **WORK VEHICLE AND WORK VEHICLE MANAGEMENT SYSTEM**
NUTZFAHRZEUG UND STEUERUNGSSYSTEM EINES NUTZFAHRZEUGS
VÉHICULE DE CHANTIER ET SYSTÈME DE COMMANDE DE VÉHICULE DE CHANTIER

(43) Date of publication of application: 09.05.2018
(73) Proprietor: Komatsu Ltd., Tokyo 107-8414 (JP)
(72) Inventor: KONDO, Shinya, Tokyo 107-8414 (JP)
(74) Representative: Grünecker Patent- und Rechtsanwälte PartG mbB
(86) International application number: PCT/JP2016/078300
(87) International publication number: WO 2018/055775

(56) References cited:
- WO-A1-2015/030240
- WO-A1-2016/039488
- DE-A1-102004 033 861
- DE-A1-102005 010 546
- DE-T5-112015 000 147
- JP-A- 2000 302 063
- JP-A- 2001 354 128
- JP-A- 2002 137 766
- JP-A- 2002 137 766
- JP-A- 2003 019 984
- JP-A- 2005 036 750
- JP-A- 2008 114 825
- JP-A- 2014 196 005
- JP-B1- 5 970 623
- US-A1- 2016 063 864
- US-B2- 9 114 705
- US-B2- 9 114 705

## Description

### TECHNICAL FIELD

The present invention relates to a working vehicle including a front vehicle body and a rear vehicle body rotatably connected to the front vehicle body, and a control system of the working vehicle.

### BACKGROUND ART

Heretofore, a working vehicle such as an articulated dump truck including a front vehicle body and a rear vehicle body rotatably connected to the front vehicle body has been known.

It is important for an operator to drive such a working vehicle while checking a relative status of a roll angle of the front vehicle body and a roll angle of the rear vehicle body.

Patent Literature 1 discloses a technique of detecting a relative roll angle of a first frame (the front vehicle body) and a second frame (the rear vehicle body), and locking an interaxle differential that connects the first frame and the second frame when the roll angle exceeds a predetermined threshold.

Further, Patent Literature 2 discloses a technique of detecting a relative roll angle of a tractor and a trailer and activating an alarm for a driver depending on a size of the relative roll angle and a degree of angle variation.

Patent Literature 3 discloses a technique for detecting a relative roll angle of a front and rear vehicle body, and to execute a deceleration control when the angle exceeds a certain threshold.

Patent Literature 4 discloses to reduce and finally stop the acceleration of a vehicle depending on the detected roll angle.

### CITATION LIST

### PATENT LITERATURE(S)

Patent Literature 1: US Patent No. US 9 114 705 B2
Patent Literature 2: JP2003-19984 A
Patent Literature 3: DE 11 2015 000147 T5
Patent Literature 4: DE 10 2004 033861 A

### SUMMARY OF THE INVENTION

### PROBLEM(S) TO BE SOLVED BY THE INVENTION

However, according to the technique disclosed in Patent Literature 1, only the locking of the interaxle differential is performed, so that the relative roll angle of the first frame and the second frame is maintained. As a result, the only way to restitute to a normal status is left to an operation by the driver.

According to the technique disclosed in Patent Literature 2, only the activation of alarm is performed for a driver. Accordingly, the only way to restitute to a normal status is left to an operation of an accelerator and an operation of a handle by the driver.

In particular, at a dig site in a mine or the like, there are an uneven road surface, a slippery road surface due to rainfall or the like, or a severely undulating road surface. A status restitution method, which is more secure and keeps up with a change in the behavior of the front vehicle body and the rear vehicle body and the relative change in the attitude of the front vehicle body and the rear vehicle body while the working vehicle travels, has been desired.

An object of the invention is to provide a working vehicle capable of performing more secure status restitution and a control system for a working vehicle capable of controlling a driving status and the like of a working vehicle.

### MEANS FOR SOLVING THE PROBLEM(S)

That object is achieved by the subject matter of claims 1 and 5. The dependent claims describe advantageous embodiments.

A working vehicle according to an aspect of the invention includes: a front vehicle body; a rear vehicle body rotatably connected to the front vehicle body; an engine; a front travel device provided to the front vehicle body; a rear travel device provided to the rear vehicle body; a power transmission device configured to transmit power of the engine to the front travel device and the rear travel device; an accelerator device configured to adjust an output of the engine; an accelerator amount detection unit configured to detect an adjustment amount of the accelerator device; a vehicle status detection unit configured to detect a vehicle status comprising an acceleration of each of the front vehicle body and the rear vehicle body; a rollover predictor judgment unit configured to judge whether or not each of the front vehicle body and the rear vehicle body is in a rollover predictor status based on the vehicle status of each of the front vehicle body and the rear vehicle body detected by the vehicle status detection unit; and an engine power control unit configured to output a change command of the adjustment amount to the accelerator device detected by the accelerator amount detection unit to decelerate the front travel device and the rear travel device at the same time when the rollover predictor judgment unit judges that each of the front vehicle body and the rear vehicle body is in the rollover predictor status.

According to the above aspect of the present invention, provision of the vehicle status detection unit and the rollover predictor judgment unit makes it possible to judge whether or not the working vehicle is in the rollover predictor status while the working vehicle travels. Since the engine power control unit is provided, when the working vehicle is in the rollover predictor status, it is possible to output the change command of the adjustment amount to the accelerator device and perform deceleration of the front travel device and rear travel device at the same time. Accordingly, without the operation by the operator, deceleration of the working vehicle is performed, and more secure status restitution can be achieved.

In the above arrangement, it is preferable that the vehicle status detection unit includes a roll angle detection unit configured to detect a roll angle of the rear vehicle body, the working vehicle includes an alarm activation unit configured to activate an alarm when the rollover predictor judgment unit judges that each of the front vehicle body and the rear vehicle body is in the rollover predictor status, and the engine power control unit does not output the change command of the adjustment amount to the accelerator device when the rollover predictor judgment unit judges that each of the front vehicle body and the rear vehicle body is in the rollover predictor status and the roll angle detected by the roll angle detection unit is larger than a predetermined value.

In the above arrangement, it is preferable that the rear vehicle body includes a chassis and a body capable moving up and down with respect to the chassis, and the working vehicle includes a body rising-and-falling restriction unit configured to restrict upward and downward movement of the body when a roll angle of the rear vehicle body detected by the roll angle detection unit is larger than a predetermined value.

In the above arrangement, it is preferable that the working vehicle further includes: an accelerator operation amount restitution unit configured to perform restitution to an operation amount of the accelerator device operated by the operator after a predetermined period of time elapses from completion of deceleration control of each of the front travel device and the rear travel device by the engine power control unit.

A control system of a working vehicle according to an aspect of the invention includes: any one of the above-described working vehicles; an operator identification device configured to identify an operator of the working vehicle; a history information generation unit configured to generate history information with a time stamp when an acceleration of each of the front vehicle body and the rear vehicle body detected by the vehicle status detection unit becomes a predetermined value or more; and a history information output unit configured to outwardly output information of the operator identified by the operator identification device, the vehicle position detected by the vehicle position detection device, and the time stamp generated by the history information generation unit in association with each other.

### BRIEF DESCRIPTION OF DRAWING(S)

Fig. 1 is a perspective view showing an articulated dump truck as a working vehicle according to an exemplary embodiment of the invention.
Fig. 2 is a plan view showing a relevant part of the articulated dump truck according to the exemplary embodiment.
Fig. 3 is a schematic plan view showing locations of sensors according to the exemplary embodiment.
Fig 4 is a block diagram showing a configuration of a control system of a working vehicle according to the exemplary embodiment.
Fig. 5 is a graph showing a restitution of an accelerator operation amount performed by an accelerator operation amount restitution unit according to the exemplary embodiment.
Fig. 6 is a schematic view of a configuration of history information generated by a history information generation unit according to the exemplary embodiment.
Fig, 7 is a flowchart showing an operation according to the exemplary embodiment.
Fig. 8 is a flowchart showing an operation according to the exemplary embodiment.

### DESCRIPTION OF EMBODIMENT(S)

Exemplary embodiment(s) of the invention will be described below with reference to the attached drawings.

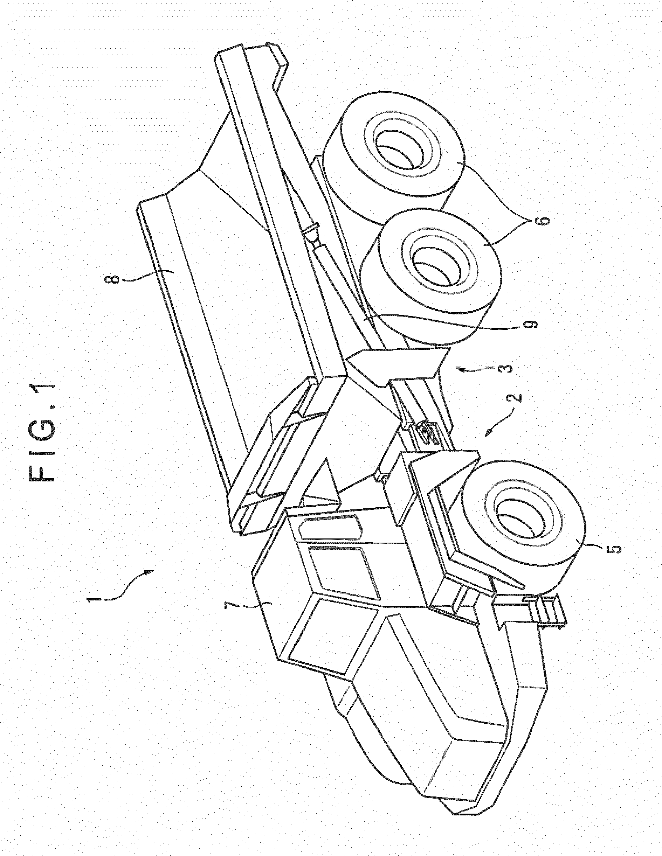

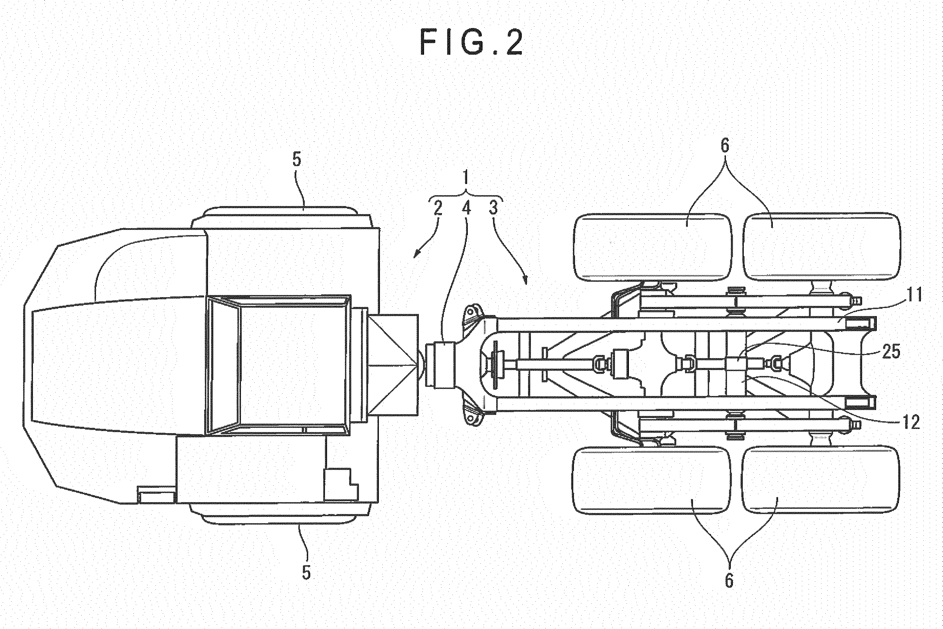

Figs. 1 and 2 show an articulated dump truck as a working vehicle 1 according to an exemplary embodiment. It should be noted that, in the description of the drawings, a vehicle front-back direction, a vehicle width direction and a vehicle vertical direction for an operator in an operation attitude of the working vehicle 1 will be respectively simply referred to as a front-back direction, a right-left direction and a vertical direction.

### 1. Outline of Working Vehicle 1

The working vehicle 1 includes a front vehicle body 2 having front wheels 5, a rear vehicle body 3 having rear wheels 6, and a connection device 4 configured to connect the front vehicle body 2 and the rear vehicle body 3. The working vehicle 1 is a six-wheel drive vehicle in which all of two front wheels 5 (i.e., one left front wheel 5 and one right front wheel 5) as a front travel device and four rear wheels 6 (i.e., two left rear wheels 6 and two right rear wheels 6) as a rear travel device are driven. Such a working vehicle 1 is, for example, capable of traveling on an uneven road surface and used to convey earth, sand and the like.

A cab 7 is provided on the front vehicle body 2. A dump body 8 on which soil, sand and the like are loaded is provided on the rear vehicle body 3 rotatably connected to the front vehicle body 2. The dump body 8 can be moved up and down with respect to a chassis using a hoist cylinder 9 so as to discharge the loaded soil, sand and the like.

The connection device 4 connects the rear vehicle body 3 to the front vehicle body 2 so that the rear vehicle body 3 is rotatable around a horizontal axis along the front-back direction of the working vehicle 1 and rotatable around a vertical axis. It should be noted that the connection device 4, although not shown, also functions as a part of a power transmission device configured to transmit power of an engine mounted on the front vehicle body 2 from the front vehicle body 2 to the rear vehicle body 3.

### 2. Arrangement of Sensor

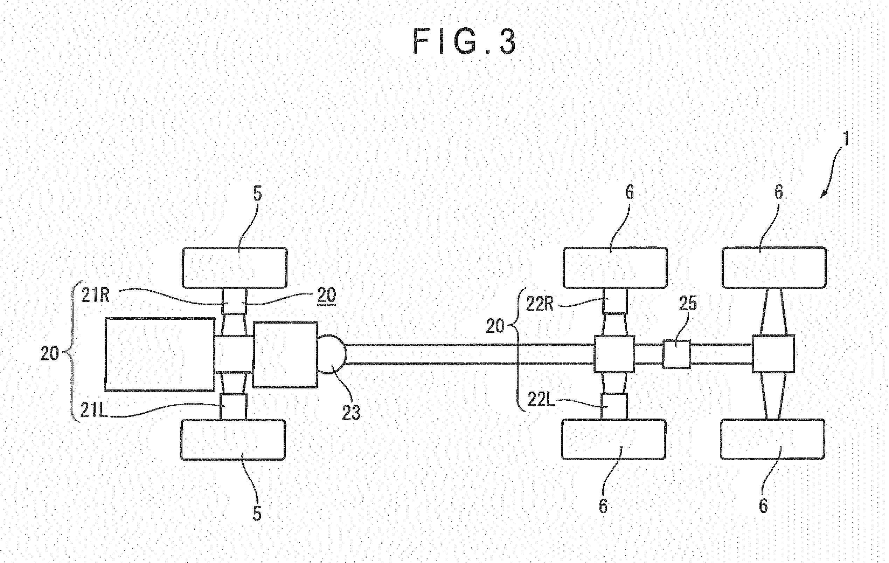

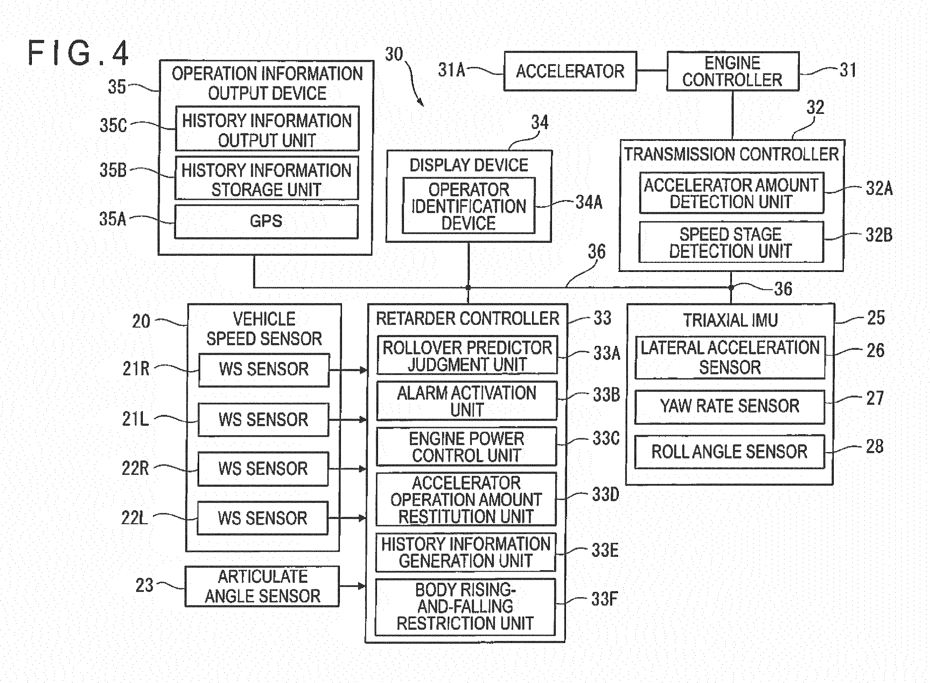

Next, sensors used in the exemplary embodiment will be described below with reference to Figs. 3 and 4.

The working vehicle 1 includes: a vehicle speed sensor 20 that is configured to detect vehicle speed information of the working vehicle 1; an articulate angle sensor (steering-angle sensor) 23 that is configured to detect an articulate angle of the front vehicle body 2 with respect to the rear vehicle body 3 as steering-angle information; and an Inertial Measurement Unit (IMU) 25.

The vehicle speed sensor 20 includes wheel speed sensors 21L, 21R configured to detect rotation speeds of right and left front wheels 5, and wheel speed sensors 22L, 22R configured to detect rotation speeds of right and left rear wheels 6.

It should be noted that the steering-angle sensor is not limited to the articulate angle sensor 23 but may be a sensor configured to detect a steering angle of a handle operated by the operator.

The IMU 25 at least detects a lateral acceleration, yaw rate (yaw angle speed), and a roll angle of the rear vehicle body 3. Accordingly, the IMU 25 functions as a lateral acceleration sensor 26 configured to detect the lateral acceleration, a yaw rate sensor 27 configured to detect a yaw rate, and a roll angle sensor 28 as a roll angle detection unit (see Fig. 4).

It is preferable that the IMU 25 is disposed at a position close to a centroid of a rear frame 11 of the rear vehicle body 3. In the exemplary embodiment, as shown in Fig. 2, the IMU 25 is disposed on a cross member 12 capable of receiving the IMU 25 and disposed at a position close to the centroid of the rear frame 11. Accordingly, the accuracy of the values detected by the IMU 25 can be enhanced, and a judgment accuracy of the rollover predictor status judged based on the detected values can also be enhanced. It should be noted that, when the IMU 25 is greatly remote from the centroid and the accuracy of the detected values may influence on the judgment accuracy, the detected values may be corrected according to the distance between the centroid and the IMU 25.

### 3. Arrangement of Control System 30 of Working Vehicle

Next, a control system 30 of the working vehicle in the exemplary embodiment will be described with reference to Fig. 4. The working vehicle 1 includes an engine controller 31, a transmission controller 32, a retarder controller 33, a display device 34, and an operation information output device 35. The engine controller 31, the transmission controller 32, the retarder controller 33, the display device 34, the operation information output device 35 and the IMU 25 are connected in a manner capable of mutual communication through a Controller Area Network (CAN) 36. Incidentally, the vehicle speed sensor 20, the articulate angle sensor 23 and the IMU 25 constitute a vehicle status detection unit of the exemplary embodiment.

The engine controller 31 is configured to control an operation of the engine provided to the front vehicle body 2, receive a detection signal from various sensors provided to the engine, and output a control command to a fuel injection device (not shown) of the engine and the like based on an operation amount of an accelerator 31A as an accelerator device operated by the operator. The accelerator 31A as the accelerator device uses an accelerator pedal. An example of the fuel injection device may include a governor.

The transmission controller 32 generates a master command for the engine and outputs the generated master command to the engine controller 31. The engine controller 31 outputs a substantial control command based on the received master command. The transmission controller 32 includes an accelerator amount detection unit 32A and a speed stage detection unit 32B.

The accelerator amount detection unit 32A detects an operation amount of the accelerator pedal and outputs the detected operation amount through the CAN 36 to the retarder controller 33. Examples of the accelerator amount detection unit 32A may include a stroke sensor and an encoder capable of detecting an operation amount of the accelerator pedal. The speed stage detection unit 32B detects a speed stage of a transmission in the power transmission device, and outputs the information of the currently set speed stage through the CAN 36 to the retarder controller 33.

The retarder controller 33 is a controller configured to control a retarder provided in the working vehicle 1 and has a function of judging a rollover predictor status. The retarder controller 33 receives the input of a lateral acceleration detected by the lateral acceleration sensor 26 of the IMU 25, a yaw rate detected by the yaw rate sensor 27, a roll angle detected by the roll angle sensor 28, a vehicle speed based on the wheel speeds of the front wheels 5 and rear wheels 6 detected by the wheel speed sensors 21R, 21L, 22R and 22L of the vehicle speed sensor 20, and an articulate angle detected by the articulate angle sensor 23. Based on the received information, it is judged whether or not the working vehicle 1 is in the rollover predictor status.

The retarder controller 33 includes a rollover predictor judgment unit 33A, an alarm activation unit 33B, an engine power control unit 33C, an accelerator operation amount restitution unit 33D, a history information generation unit 33E and a body rising-and-falling restriction unit 33F.

The rollover predictor judgment unit 33A judges that the working vehicle 1 is in the rollover predictor status when a status in which the lateral acceleration applied to the rear vehicle body 3 exceeds a predetermined threshold continues for a predetermined period of time.

According to the exemplary embodiment, in order to improve the accuracy of the judgment of the rollover predictor status, the lateral acceleration is calculated a plurality of times, and the judgment is performed based on whether or not each of the calculated lateral accelerations meets the condition of the rollover predictor status.

Specifically, the rollover predictor judgment unit 33A calculates a first lateral acceleration based on the lateral acceleration detected by the lateral acceleration sensor 26 and the roll angle detected by the roll angle sensor 28.

Next, the rollover predictor judgment unit 33A calculates a second lateral acceleration based on the yaw rate detected by the yaw rate sensor 27 and a rotation radius detected by the articulate angle sensor 23.

Further, the rollover predictor judgment unit 33A calculates a third lateral acceleration based on the vehicle speed detected by the vehicle speed sensor 20 and a rotation radius detected by the articulate angle sensor 23.

Lastly, the rollover predictor judgment unit 33A calculates a fourth lateral acceleration based on the yaw rate detected by the yaw rate sensor 27 and the vehicle speed detected by the vehicle speed sensor 20.

Subsequently, the rollover predictor judgment unit 33A judges whether or not the working vehicle 1 is in the rollover predictor status based on whether or not a status in which each of the first to fourth accelerations exceeds a threshold set correspondingly continues for a predetermined period of time.

When the rollover predictor judgment unit 33A judges that the working vehicle 1 is in the rollover predictor status, the rollover predictor judgment unit 33A outputs the information of the working vehicle 1 in the rollover predictor status to the alarm activation unit 33B.

When the rollover predictor judgment unit 33A judges that the working vehicle 1 is in the rollover predictor status, the alarm activation unit 33B generates alarm activation information and outputs the generated alarm activation information to the display device 34. Upon receiving the alarm activation information, the display device 34 displays an alarm on a monitor of the display device 34 (i.e., activates an alarm) so that an operator is informed of the rollover predictor status of the working vehicle 1. Additionally, as necessary, an alarm is sounded from a speaker installed in the display device 34 or a speaker installed in the vehicle (i.e., an alarm is activated).

When the rollover predictor judgment unit 33A judges that the working vehicle 1 is in the rollover predictor status and the calculated lateral acceleration exceeds a first threshold (e.g., a lateral acceleration G at a predetermined level (G: unit of lateral acceleration)), the engine power control unit 33C outputs the change command of the accelerator adjustment amount to the accelerator device so as to decrease the speed of the front wheels 5 and the speed of the rear wheels 6 at the same time (e.g., perform a deceleration control). The lateral acceleration G at a predetermined level (i.e., the first threshold) may be set in advance in accordance with an automobile rank of the working vehicle 1 or the like. It should be noted that the alarm activation unit 33B activates an alarm at the same timing as the start of the deceleration control.

Specifically, based on the operation amount of the accelerator 31A detected by the accelerator amount detection unit 32A, the engine power control unit 33C generates the change command of the adjustment amount for decreasing the operation amount of the accelerator 31A, and outputs the generated change command to the transmission controller 32. The transmission controller 32 outputs the change command of the adjustment amount as a master command.

The engine controller 31 outputs a control command for deceleration to the fuel injection device or the like based on the operation amount of the accelerator 31A and the master command from the transmission controller 32 so as to decrease the speed of the front wheels 5 and the speed of the rear wheels 6 of the working vehicle 1 at the same time.

When the roll angle detected by the roll angle sensor 28 is larger than a second threshold set in advance, the engine power control unit 33C does not output the change command of the adjustment amount to the accelerator device. Herein, the engine power control unit 33C may be configured not to output the change command of the adjustment amount to the accelerator device when a condition that the vehicle speed detected by the vehicle speed sensor 20 is lower than a predetermined speed (i.e., in a low-speed travelling status) is satisfied in addition to the condition that the roll angle detected by the roll angle sensor 28 is larger than the second threshold.

The deceleration control is not performed when it is judged that the working vehicle 1 is in a predefined status as described above. Even when the rollover predictor judgment unit 33A judges that the working vehicle 1 is in the rollover predictor status, in the case where the roll angle detected by the roll angle sensor 28 is large, it is judged that the working vehicle 1 is not in a status in which the working vehicle 1 is turned while traveling at a high speed but in the predefined status. The predefined status specifically means a status that the rear vehicle body 3 of the working vehicle 1 goes off the shoulder of the road and into a side ditch or enters a groove while the working vehicle 1 travels at a low speed. In such a predefined status, instead of performing the deceleration control, the output of the engine is transmitted to the front wheels 5 and rear wheels 6 while giving priority to the operation amount of the accelerator 31A operated by the operator, so that it becomes possible for the working vehicle 1 to escape from the status in which the working vehicle 1 goes off the shoulder of the road or enters a groove. Even when the detection accuracy of the roll angle sensor 28 is poor, it is possible to precisely judge that the working vehicle 1 is in the predefined status by additionally checking a condition that the vehicle speed detected by the vehicle speed sensor 20 exhibits the low-speed traveling status of the working vehicle 1 in order to perform the deceleration control only in a suitable status. With use of the vehicle speed detected by the vehicle speed sensor 20, it is possible to prevent a situation that the deceleration control is performed excessively while the working vehicle 1 travels at a low speed and the possibility of rollover is low.

The accelerator operation amount restitution unit 33D functions so that the restitution to the operation amount of the accelerator 31A operated by the operator is performed after the elapse of a predetermined period of time from the completion of the deceleration control by the engine power control unit 33C.

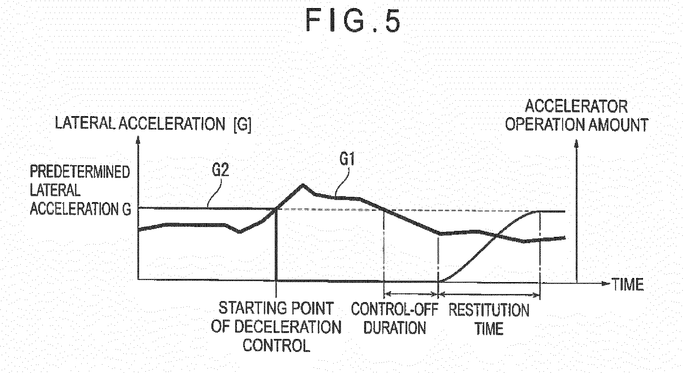

Specifically, as illustrated in Fig. 5, when the lateral acceleration exceeds the predetermined lateral acceleration G as the first threshold as shown by a graph G1 (thick solid line) and the rollover predictor judgment unit 33A judges that the working vehicle 1 enters the rollover predictor status, the engine power control unit 33C generates the change command of the adjustment amount to be output to the accelerator device and performs the deceleration control so that the accelerator operation amount becomes substantially zero as shown by a graph G2 (medium thick solid line). It should be noted that, as described above, the rollover predictor judgment unit 33A judges that the working vehicle 1 is in the rollover predictor status when a status in which each of the first to fourth accelerations exceeds the respective thresholds continues for a predetermined period of time, and the deceleration control is started. In Fig. 5, the continuation of the status for the predetermined period of time is not shown, and the starting point of the deceleration control shown in Fig. 5 represents the point of time at which the predetermined period of time has elapsed.

Thereafter, when the lateral acceleration falls below the predetermined lateral acceleration G, the engine power control unit 33C terminates the deceleration control. However, as shown in Fig. 5, the accelerator operation amount restitution unit 33D continues the status of deceleration control by a length of time corresponding to a control-off duration (i.e., the period of time during which the control keeps to be not performed), and subsequently the accelerator operation amount restitution unit 33D functions so that the restitution to the operation amount of the accelerator operated by the operator is gradually performed during the restitution time that is a predetermined period of time. The control-off duration is a preset length of time. At the same time as the control-off duration passes, the activated alarm is stopped.

In order to gradually perform the restitution to the operation amount of the accelerator operated by the operator during the restitution time, a predefined length of time may be set as the restitution time, and an increment of the accelerator operation amount per unit of time during the restitution time may be calculated, so as to perform the restitution. Alternatively, only the increment of the accelerator operation amount per unit of time may be predefined, so as to perform the restitution.

Since such an accelerator operation amount restitution unit 33D is provided, even when the deceleration control by the engine power control unit 33C is terminated, the restitution to the operation amount of the accelerator operated by the accelerator 31A does not suddenly occur, but the restitution is gradually performed. Accordingly, quick acceleration and the like can be avoided. Thus, the operator of the working vehicle 1 can automatically perform the restitution of the accelerator operation amount corresponding to the accelerator operation amount caused by pressing the accelerator 31A without feeling uncomfortable.

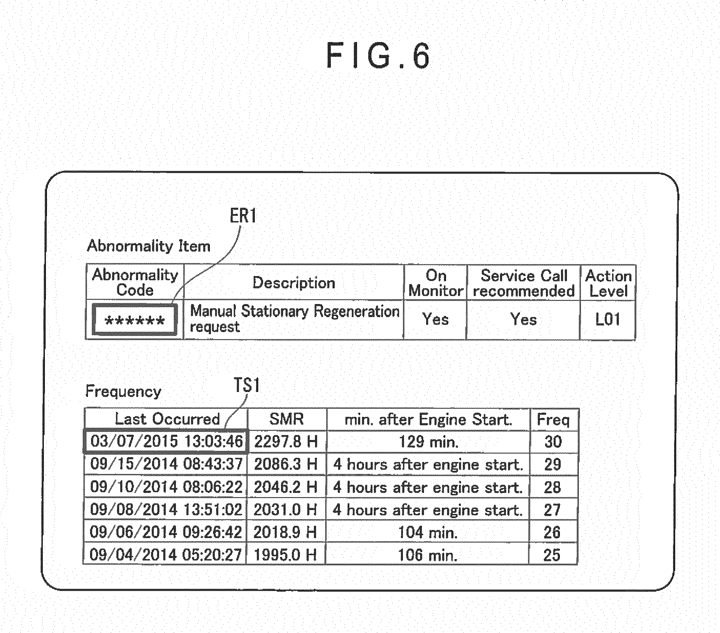

When the lateral acceleration detected by the lateral acceleration sensor 26 exceeds a predetermined value, the history information generation unit 33E sets an error code ER1 and gives a time stamp TS1 to the error code ER1. Specifically, as shown in Fig. 6, when the lateral acceleration sensor 26 detects an acceleration equal to or more than a lateral acceleration G' (fourth threshold) that is set lower than the predetermined lateral acceleration G (first threshold) at which the deceleration control is performed by the engine power control unit 33C, the history information generation unit 33E generates the history information. Generation of the history information means that the error code ER1 is generated and the time stamp TS1 is given to the generated error code ER1, for example. It should be noted that, as shown in Fig. 6, in the exemplary embodiment, the error code ER1 is associated with whether or not the alarm is displayed by the display device 34, a level of the error code ER1 and the like.

After generating the history information, the history information generation unit 33E outputs the generated history information to the operation information output device 35.

When the speed stage detected by the speed stage detection unit 32B is neutral and the roll angle detected by the roll angle sensor 28 is the third threshold or more, the body rising-and-falling restriction unit 33F restricts the upward and downward movement of the dump body 8 of the rear vehicle body 3. Herein, the conditions for restricting the upward and downward movement of the dump body 8 include a condition that the speed stage is neutral. Alternatively, the conditions for restricting the upward and downward movement of the dump body 8 may include a condition that the speed stage is at another stage. Further alternatively, the conditions for restricting the upward and downward movement of the dump body 8 may not include a condition regarding the speed stage. Specifically, the body rising-and-failing restriction unit 33F restricts the upward and downward movement of the dump body 8 of the rear vehicle body 3 at least under the condition that the roll angle detected by the roll angle sensor 28 is the third threshold or more.

It should be noted that, in the case where the conditions for restricting the upward and downward movement of the dump body 8 include a condition regarding the speed stage, the body rising-and-falling restriction unit 33F may be configured not to restrict the upward and downward movement of the dump body 8 when the speed stage detected by the speed stage detection unit 32B is in a drive range. This is because the working vehicle 1 travels in the drive range and it is highly likely that the working vehicle 1 discharges the loaded soil, sand and the like while traveling.

As the method for restricting the upward and downward movement of the dump body 8, the power to a dump switch provided in the cab 7 for instructing the upward and downward movement of the dump body 8 may be shut off, or a part of a hydraulic circuit may be closed by a solenoid valve to restrict supply of hydraulic oil to the hoist cylinder 9.

Provision of the body rising-and-falling restriction unit 33F as described above enables to restrict the upward and downward movement of the dump body 8 and prevent the working vehicle 1 from overturning when the working vehicle 1 is in the rollover predictor status and the roll angle is at least the predetermined threshold or more.

The display device 34 is a touch panel monitor, for example, and displays an alarm based on the alarm activation information from the alarm activation unit 33B of the retarder controller 33, and also functions as an operator identification device 34A upon operation of the touch panel. The display device 34 may include a liquid crystal panel and a switch, instead of using the touch panel.

At the time of starting the driving of the working vehicle 1, the operator identification device 34A displays a screen to urge the operator to input an identification number of the operator, a password and the like. When the operator inputs the identification number, the password and the like, it becomes possible to start the engine of the working vehicle 1. The identification number input by the operator identification device 34A is output to the operation information output device 35.

The operation information output device 35 includes, for example, a storage device such as a memory and a communication device, collects the operation information of the working vehicle 1, accumulates the history information, and outwardly outputs the accumulated history information as the operation information. The operation information output device 35 includes a Global Positioning System (GPS) 35A as a vehicle position detection device, a history information storage unit 35B, and a history information output unit 35C. The GPS 35A detects a vehicle position of the working vehicle 1 by receiving radio wave via a plurality of communication satellites.

The history information storage unit 35B accumulates the history information generated by the history information generation unit 33E, the identification information of the operator input by the operator identification device 34A, and the position information of the working vehicle 1 detected by the GPS 35A in association with each other. According to the exemplary embodiment, the history information in association with the identification information of the operator and the position information as described above is also dealt with as the history information.

The history information output unit 35C outwardly outputs the history information accumulated in the history information storage unit 35B. The history information output unit 35C includes wireless communication equipment. The history information output unit 35C outputs the history information to remote locations via communication satellites or mobile communications in order to outwardly output the history information. For example, the history information may be output to an office of a manufacturer of the working vehicle 1 and an administration office at which an administrator of the working vehicle 1 and the like are located. Alternatively, the history information may be output to an administration office at a dig site via wireless LAN line.

The history information as described above is accumulated and outwardly output, so that the administration office and the like can perceive an operator who tends to cause an operation leading to the rollover predictor status of the working vehicle 1, a location of the work area and a working hour in which the rollover predictor status tends to occur. Accordingly, it is possible to prevent the working vehicle 1 from overturning in advance through driver education for the operators, improvement of work areas and the like.

### 4. Operation and Effect of Control System 30 of Working Vehicle

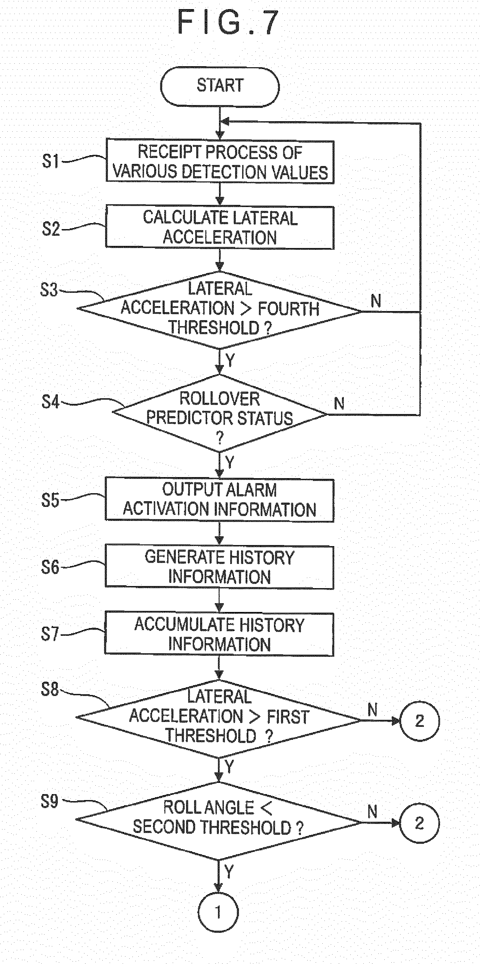

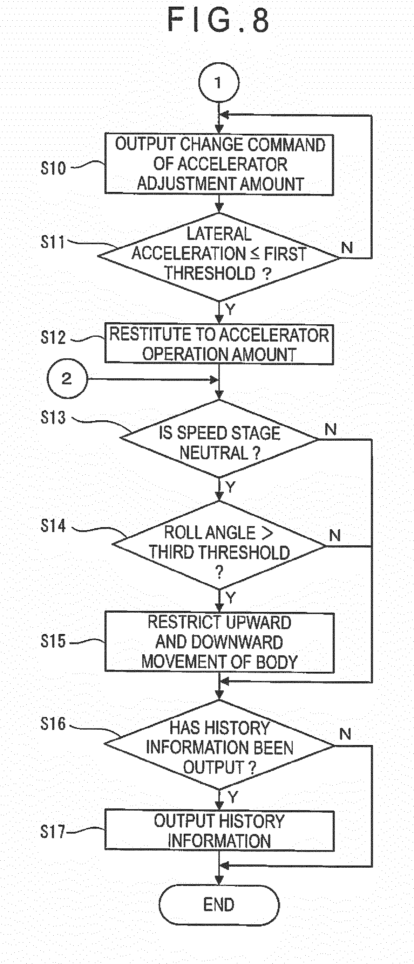

Next, an operation of the control system 30 of the working vehicle is explained with reference to flowcharts in Figs. 7 and 8.

The retarder controller 33 performs a receipt process of the detection values detected by various sensors including the vehicle speed sensor 20, articulate angle sensor 23, IMU 25 and transmission controller 32 (Step S1).

The rollover predictor judgment unit 33A calculates the lateral acceleration applied to the rear vehicle body 3 by the above-described method based on the input detection values of the lateral acceleration sensor 26 (Step S2). Further, as described above, the history information generation unit 33E judges whether or not the calculated lateral acceleration is the fourth threshold or more (Step S3). When the detected lateral acceleration is less than the fourth threshold (S3: No), the procedure returns to Step S1 and the process is repeated from Step S1. When the history information generation unit 33E judges that the detected lateral acceleration is the fourth threshold or more (Step S3: Yes), the rollover predictor judgment unit 33A judges whether or not the working vehicle 1 is in the rollover predictor status (Step S4). When the rollover predictor judgment unit 33A judges that the working vehicle 1 is not in the rollover predictor status (S4: No), the process is repeated from Step S1.

When the rollover predictor judgment unit 33A judges that the working vehicle 1 is in the rollover predictor status (S4: Yes), the alarm activation unit 33B generates alarm activation information and outputs the generated alarm activation information to the display device 34 (Step S5). The display device 34 displays an alarm to inform that the working vehicle 1 is in the rollover predictor status.

The history information generation unit 33E generates the history information when the alarm activation unit 33B outputs the alarm activation information (Step S6). Subsequently, the history information generation unit 33E identifies the operator information that is input to the operator identification device 34A of the display device 34, and outputs the identified operator information in association with the generated history information to the operation information output device 35.

The history information storage unit 35B accumulates the history information that is output from the history information generation unit 33E and the position information of the working vehicle 1 obtained by the GPS 35A in association with each other in a storage device (e.g., a storage medium such as a memory) (Step S7).

When the rollover predictor judgment unit 33A judges that the working vehicle 1 is in the rollover predictor status, the engine power control unit 33C judges whether or not the lateral acceleration detected by the lateral acceleration sensor 26 is larger than the first preset threshold (Step S8). When the engine power control unit 33C judges that the lateral acceleration is smaller than the first threshold (S8: No), the procedure proceeds to Step S13 to be described later without performing the process for changing the adjustment amount of the accelerator device.

When it is judged that the lateral acceleration is larger than the first threshold (S8: Yes), the engine power control unit 33C judges whether or not the roll angle is smaller than the second threshold (Step S9). When it is judged that the roll angle is larger than the second threshold (S9: No), the procedure proceeds to Step S13 to be described later without performing the process for changing the adjustment amount of the accelerator device.

When the roll angle is smaller than the second threshold (S9: Yes), the engine power control unit 33C generates the change command of the accelerator adjustment amount and outputs the generated command to the transmission controller 32 (Step S10). The transmission controller 32 generates the master command to the engine controller 31 based on the change command of the adjustment amount of the accelerator device and outputs the generated master command to the engine controller 31. The engine controller 31 adds the operation amount of the accelerator 31A operated by the operator and the master command from the transmission controller 32 so as to perform deceleration control of the front wheels 5 and the rear wheels 6. It should be noted that, as described above, since at the same time as the deceleration control, the alarm activation information is outputted (an alarm is activated) by the alarm activation unit 33B, the Step S5, Step S6 and Step S10 are performed at approximately the same timing.

The engine power control unit 33C outputs the change command of the adjustment amount of the accelerator device and continuously judges whether or not the lateral acceleration that is input from the lateral acceleration sensor 26 falls at or below the first threshold or less (Step S11). When the lateral acceleration does not become the first threshold or less (S11: No), the engine power control unit 33C continues to output the change command of the adjustment amount of the accelerator device.

When the lateral acceleration becomes the first threshold or less (S11: Yes), the accelerator operation amount restitution unit 33D keeps the decelerated status of each of the front wheels 5 and rear wheels 6 for a predetermined period of time (the control-off duration shown in Fig. 5) based on the accelerator amount by the accelerator amount detection unit 32A. Thereafter, the gradual restitution to the operation amount of the accelerator 31A operated by the operator is performed for a predetermined period of time so that the adjustment amount of the accelerator device corresponds to the operation amount of the accelerator 31A operated by the operator (Step S12).

The body rising-and-falling restriction unit 33F obtains the speed stage information from the speed stage detection unit 32B of the transmission controller 32, and judges whether or not the speed stage is set to neutral, for example (Step S13). It should be noted that, as described above, it is not necessary to judge whether or not the speed stage is neutral at Step S13. Alternatively, instead of Step S13, a step for judging whether or not the speed stage is at a speed stage other than neutral may be performed.

When it is judged that the speed stage is set to neutral (S13: Yes), the body rising-and-falling restriction unit 33F judges whether or not the roll angle detected by the roll angle sensor 28 is larger than the third threshold (Step S14).

When it is judged that the roll angle is larger than the third threshold (S14: Yes), for example, the body rising-and-falling restriction unit 33F restricts the supply of the hydraulic oil to the hoist cylinder 9 so as to restrict the upward and downward movement of the dump body 8 (Step S15).

In contrast, when the speed stage is not set to neutral (S13: No), or when it is judged that the roll angle is the third threshold or less (S14: No), the body rising-and-falling restriction unit 33F does not restrict the upward and downward movement of the dump body 8.

The history information output unit 35C judges whether or not the current status is a status in which the history information should be output (Step S16). Examples of the status in which the history information should be output include the timing and the location at which the history information is output. The timing of outputting the history information can be set at will. Through the history information may be output every time it is determined that the working vehicle 1 is in the rollover predictor status, when the history information is output via communication satellites, the history information is preferably output at most once or twice a day, for example. When the location at which the history information is output is dealt with as the status in which the history information should be output, the following steps may be executed. In Step S16, the history information output unit 35C judges whether or not the current position of the working vehicle 1 detected by the GPS 35A is within a preset area, and, when the history information output unit 35C judges that the current position is within the preset area, for example, the history information may be output at the timing as the timing of outputting the history information.

The history information output unit 35C outputs the history information accumulated in the history information storage unit 35B to a control system of an external manufacturer, a control system owned by an administrator of the working vehicle 1, a control system of a site office and the like (Step S17). It should be noted that, the history information may be output to one or two or more locations. When the current status is not the status in which the history information should be output, the history information output unit 35C does not output the history information and the process is repeated from Step S1.

Provision of the vehicle speed sensor 20, the articulate angle sensor 23, the IMU 25 and the rollover predictor judgment unit 33A enables to judge that the working vehicle 1 is in the rollover predictor status while traveling. Since the engine power control unit 33C is provided, when the working vehicle 1 is in the rollover predictor status, it is possible to output the change command of the adjustment amount of the accelerator device and perform deceleration of the front wheels 5 and rear wheels 6 automatically and simultaneously. Accordingly, without the operation by the operator, deceleration of the working vehicle 1 is performed, and more secure status restitution can be performed.

### 5. Modification of Embodiment(s)

Incidentally, it should be understood that the scope of the present invention is not limited to the above-described exemplary embodiments but includes modifications and improvements as long as the modifications and improvements are compatible with the invention.

For example, according to the exemplary embodiment, the IMU 25 detects the lateral acceleration, the yaw rate and the roll angle. However, the scope of the invention is not limited thereto. The lateral acceleration, the yaw rate and the roll angle may be respectively detected by separate sensors.

According to the exemplary embodiment, although the operator identification device 34A identifies the operator by inputting the identification number, the scope of the invention is not limited thereto. An operator identification device comprising an engine key in which identification information for identifying the operator is stored and a reader, or an operator identification device utilizing biometric authentication such as fingerprint authentication may be used to perform identification.

Further, the specific arrangements and configurations may be altered in any manner as long as the modifications and improvements are compatible with the invention, as defined by the appended claims.

### EXPLANATION OF CODE(S)

1···working vehicle, 2···front vehicle body, 3···rear vehicle body, 4···connection device, 5···front wheel, 6···rear wheel, 7···cab, 8···dump body, 9···hoist cylinder, 11··· rear frame, 12···cross member, 20···vehicle speed sensor, 21L···wheel speed sensor, 21R ···wheel speed sensor, 22L···wheel speed sensor, 22R···wheel speed sensor, 23··· articulate angle sensor, 25···IMU, 26···lateral acceleration sensor, 27···yaw rate sensor, 28···roll angle sensor, 30···control system, 31···engine controller, 31A···accelerator, 32 ···transmission controller, 32A···accelerator amount detection unit, 32B...speed stage detection unit, 33...retarder controller, 33A...rollover predictor judgment unit, 33B...alarm activation unit, 33C...engine power control unit, 33D...accelerator operation amount restitution unit, 33E...history information generation unit, 33F...body rising-and-falling restriction unit, 34...display device, 34A...operator identification device, 35...operation information output device, 35A...GPS, 35B...history information storage unit, 35C...history information output unit, ER1...error code, TS1...time stamp.

## Claims

1. A working vehicle (1) comprising:
a front vehicle body (2);
a rear vehicle body (3) rotatably connected to the front vehicle body (2);
an engine;
a front travel device (5) provided to the front vehicle body (2);
a rear travel device (6) provided to the rear vehicle body (3);
a power transmission device configured to transmit power of the engine to the front travel device (5) and the rear travel device (6);
an accelerator device (31A) configured to adjust an output of the engine;
an accelerator amount detection unit (32A) configured to detect an adjustment amount of the accelerator device (31A);
a vehicle status detection unit configured to detect a vehicle status comprising an acceleration of each of the front vehicle body (2) and the rear vehicle body (3);
a rollover predictor judgment unit (33A) configured to judge whether or not each of the front vehicle body (2) and the rear vehicle body (3) is in a rollover predictor status based on the vehicle status of each of the front vehicle body (2) and the rear vehicle body (3) detected by the vehicle status detection unit; and
an engine power control unit (33C) configured to output a change command of the adjustment amount of the accelerator device (31A) detected by the accelerator amount detection unit (32A) to decelerate the front travel device (5) and the rear travel device (6) at the same time when the rollover predictor judgment unit (33A) judges that each of the front vehicle body (2) and the rear vehicle body (3) is in the rollover predictor status, wherein
the vehicle status detection unit comprises a roll angle detection unit (28) configured to detect a roll angle of the rear vehicle body (3), and
the engine power control unit (33C) does not output the change command of the adjustment amount of the accelerator device (31A) when the rollover predictor judgment unit (33A) judges that each of the front vehicle body (2) and the rear vehicle body (3) is in the rollover predictor status and the roll angle detected by the roll angle detection unit (28) is larger than a predetermined value.

2. The working vehicle according to claim 1, wherein
the working vehicle (1) comprises an alarm activation unit (33B) configured to activate an alarm when the rollover predictor judgment unit (33A) judges that each of the front vehicle body (2) and the rear vehicle body (3) is in the rollover predictor status.

3. The working vehicle according to claim 2, wherein
the rear vehicle body (3) comprises a chassis and a body (8) capable moving up and down with respect to the chassis, and
the working vehicle (1) comprises a body rising-and-falling restriction unit (33F) configured to restrict upward and downward movement of the body (8) when a roll angle of the rear vehicle body (3) detected by the roll angle detection unit (28) is larger than a predetermined value.

4. The working vehicle according to any one of claims 1 to 3, further comprising:
an accelerator operation amount restitution unit (33D) configured to perform restitution to an operation amount of the accelerator device (31A) operated by the operator after a predetermined period of time elapses from completion of deceleration control of each of the front travel device (5) and the rear travel device (6) by the engine power control unit (33C).

5. A control system (30) of a working vehicle (1) for controlling a working vehicle (1) comprising a front vehicle body (2) and a rear vehicle body (3) rotatably connected to the front vehicle body (2), the control system (30) comprising:
the working vehicle (1) according to any one of claims 1 to 4;
an operator identification device (34A) configured to identify an operator of the working vehicle (1);
a vehicle position detection device (35A) configured to detect a vehicle position of the working vehicle (1);
a history information generation unit (33E) configured to generate history information with a time stamp when an acceleration of the rear vehicle body (3) detected by the vehicle status detection unit becomes a predetermined value or more; and
a history information output unit (35C) configured to outwardly output information of the operator identified by the operator identification device (34A), the vehicle position detected by the vehicle position detection device (35A), and the time stamp generated by the history information generation unit (33E) in association with each other.

## Patentansprüche

1. Arbeitsfahrzeug (1), das umfasst:
einen vorderen Fahrzeug-Körper (2);
einen hinteren Fahrzeug-Körper (3), der drehbar mit dem vorderen Fahrzeug-Körper (2) verbunden ist;
einen Motor;
eine vordere Fahr-Vorrichtung (5), die sich an dem vorderen Fahrzeug-Körper (2) befindet;
eine hintere Fahr-Vorrichtung (6), die sich an dem hinteren Fahrzeug-Körper (3) befindet;
eine Kraftübertragungs-Vorrichtung, die so eingerichtet ist, dass sie Kraft des Motors zu der vorderen Fahr-Vorrichtung (5) und der hinteren Fahr-Vorrichtung (6) überträgt;
eine Gaspedal-Vorrichtung (31A), die zum Regulieren einer Ausgangsleistung des Motors eingerichtet ist;
eine Einheit (32A) zur Erfassung eines Betrages von Betätigung des Gaspedals, die zum Erfassen des Regulierungs-Betrages der Gaspedal-Vorrichtung (31A) eingerichtet ist;
eine Einheit zur Erfassung eines Fahrzeug-Status, die zum Erfassen eines Fahrzeug-Status eingerichtet ist, der eine jeweilige Beschleunigung des vorderen Fahrzeug-Körpers (2) und des hinteren Fahrzeug-Körpers (3) umfasst;
eine Einheit (33A) zur Beurteilung von Überroll-Warnung, die so eingerichtet ist, dass sie auf Basis des durch die Einheit zur Erfassung eines Fahrzeug-Status erfassten jeweiligen Fahrzeug-Status des vorderen Fahrzeug-Körpers (2) und des hinteren Fahrzeug-Körpers (3) beurteilt, ob sich der vordere Fahrzeug-Körper (2) und der hintere Fahrzeug-Körper (3) jeweils in einem Überroll-Warnstatus befinden; sowie
eine Einheit (33C) zur Steuerung von Motorleistung, die so eingerichtet ist, dass sie eine Anweisung zum Ändern des durch die Einheit (32A) zur Erfassung eines Betrages von Betätigung des Gaspedals erfassten Regulierungs-Betrages der Gaspedal-Vorrichtung (31A) ausgibt, um die vordere Fahr-Vorrichtung (5) und die hintere Fahr-Vorrichtung (6) gleichzeitig abzubremsen, wenn die Einheit (33A) zur Beurteilung von Überroll-Warnung beurteilt, dass sich der vordere Fahrzeug-Körper (2) und der hintere Fahrzeug-Körper (3) jeweils in dem Überroll-Warnstatus befinden, wobei
die Einheit zur Erfassung eines Fahrzeug-Status eine Einheit (28) zur Erfassung eines Wankwinkels umfasst, die zum Erfassen eines Wankwinkels des hinteren Fahrzeug-Körpers (3) eingerichtet ist, und
die Einheit (33C) zur Steuerung von Motorleistung die Anweisung zum Ändern des Regulierungs-Betrages der Gaspedal-Vorrichtung (31A) nicht ausgibt, wenn die Einheit (33A) zur Beurteilung von Überroll-Warnung beurteilt, dass sich der vordere Fahrzeug-Körper (2) und der hintere Fahrzeug-Körper (3) jeweils in dem Überroll-Warnstatus befinden und der durch die Einheit (28) zur Erfassung eines Wankwinkels erfasste Wankwinkel größer ist als ein vorgegebener Wert.

2. Arbeitsfahrzeug nach Anspruch 1, wobei
das Arbeitsfahrzeug (1) eine Einheit (33B) zur Aktivierung einer Warnmeldung umfasst, die so eingerichtet ist, dass sie eine Warnmeldung aktiviert, wenn die Einheit (33A) zur Beurteilung von Überroll-Warnung beurteilt, dass sich der vordere Fahrzeug-Körper (2) und der hintere Fahrzeug-Körper (3) jeweils in dem Überroll-Warnstatus befinden.

3. Arbeitsfahrzeug nach Anspruch 2, wobei
der hintere Fahrzeug-Körper (3) ein Fahrgestell und einen Körper (8) umfasst, der sich in Bezug auf das Fahrgestell nach oben und nach unten bewegen kann, und
das Arbeitsfahrzeug (1) eine Einheit (33F) zur Einschränkung von Ansteigen und Absinken des Körpers umfasst, die so eingerichtet ist, dass sie Aufwärts- und Abwärtsbewegung des Körpers (8) einschränkt, wenn ein durch die Einheit (28) zur Erfassung eines Wankwinkels erfasster Wankwinkel größer ist als ein vorgegebener Wert.

4. Arbeitsfahrzeug nach einem der Ansprüche 1 bis 3, das des Weiteren umfasst:
eine Einheit (33D) zur Wiederherstellung eines Maßes von Betätigung des Gaspedals, die so eingerichtet ist, dass sie Wiederherstellung eines Maßes von Betätigung der durch die Bedienungsperson betätigten Gaspedal-Vorrichtung (31A) nach Ablauf einer vorgegebenen Zeitspanne nach Abschluss jeweiliger Abbrems-Steuerung der vorderen Fahr-Vorrichtung (5) und der hinteren Fahr-Vorrichtung (6) durch die Einheit (33C) zur Steuerung von Motorleistung durchführt.

5. Steuerungssystem (30) eines Arbeitsfahrzeugs (1) zum Steuern eines Arbeitsfahrzeugs (1), das einen vorderen Fahrzeug-Körper (2) sowie einen hinteren Fahrzeug-Körper (3) umfasst, der drehbar mit dem vorderen Fahrzeug-Körper (2) verbunden ist, wobei das Steuerungssystem (30) umfasst:
das Arbeitsfahrzeug (1) nach einem der Ansprüche 1 bis 4;
eine Vorrichtung (34A) zur Identifizierung einer Bedienungsperson, die zum Identifizieren einer Bedienungsperson des Arbeitsfahrzeugs (1) eingerichtet ist;
eine Vorrichtung (35A) zur Erfassung einer Fahrzeug-Position, die zum Erfassen einer Fahrzeug-Position des Arbeitsfahrzeugs (1) eingerichtet ist;
eine Einheit (33E) zur Erzeugung von Verlaufs-Informationen, die so eingerichtet ist, dass sie Verlaufs-Informationen mit einem Zeitstempel erzeugt, wenn eine durch die Einheit zur Erfassung eines Fahrzeug-Status erfasste Beschleunigung des hinteren Fahrzeug-Körpers (3) einen vorgegebenen Wert erreicht oder übersteigt; sowie
eine Einheit (35C) zur Ausgabe von Verlaufs-Informationen, die so eingerichtet ist, dass sie Informationen über die durch die Vorrichtung (34A) zur Identifizierung einer Bedienungsperson identifizierte Bedienungsperson, die durch die Vorrichtung (35A) zur Erfassung einer Fahrzeug-Position erfasste Fahrzeug-Position sowie den durch die Einheit (33E) zur Erzeugung von Verlaufs-Informationen erzeugten Zeitstempel in Verbindung miteinander nach außen ausgibt.

## Revendications

1. Véhicule utilitaire (1) comprenant :
un châssis de véhicule avant (2) ;
un châssis de véhicule arrière (3) connecté en rotation au châssis de véhicule avant (2) ;
un moteur ;
un dispositif de déplacement avant (5) fourni au châssis de véhicule avant (2) ;
un dispositif de déplacement arrière (6) fourni au châssis de véhicule arrière (3) ;
un dispositif de transmission de puissance configuré pour transmettre une puissance du moteur au dispositif de déplacement avant (5) et au dispositif de déplacement arrière (6) ;
un dispositif d'accélérateur (31A) configuré pour ajuster une sortie du moteur ;
une unité de détection de quantité d'accélérateur (32A) configurée pour détecter une quantité d'ajustement du dispositif d'accélérateur (31A) ;
une unité de détection d'état de véhicule configurée pour détecter un état de véhicule comprenant une accélération de chacun du châssis de véhicule avant (2) et du châssis de véhicule arrière (3) ;
une unité de jugement de prédicteur de renversement (33A) configurée pour juger si chacun du châssis de véhicule avant (2) et du châssis de véhicule arrière (3) est ou non dans un état de prédicteur de renversement selon l'état de véhicule de chacun du châssis de véhicule avant (2) et du châssis de véhicule arrière (3) détecté par l'unité de détection d'état de véhicule ; et
une unité de contrôle de puissance de moteur (33C) configurée pour générer une commande de changement de la quantité d'ajustement du dispositif d'accélérateur (31A) détectée par l'unité de détection de quantité d'accélérateur (32A) pour faire décélérer le dispositif de déplacement avant (5) et le dispositif de déplacement arrière (6) en même temps lorsque l'unité de jugement de prédicteur de renversement (33A) juge que chacun du châssis de véhicule avant (2) et du châssis de véhicule arrière (3) est dans l'état de prédicteur de renversement, dans lequel
l'unité de détection d'état de véhicule comprend une unité de détection d'angle de roulis (28) configurée pour détecter un angle de roulis du châssis de véhicule arrière (3), et
l'unité de contrôle de puissance de moteur (33C) ne génère pas la commande de changement de la quantité d'ajustement du dispositif d'accélérateur (31A) lorsque l'unité de jugement de prédicteur de renversement (33A) juge que chacun du châssis de véhicule avant (2) et du châssis de véhicule arrière (3) est dans l'état de prédicteur de renversement et l'angle de roulis détecté par l'unité de détection d'angle de roulis (28) est supérieur à une valeur prédéterminée.

2. Le véhicule utilitaire selon la revendication 1, dans lequel
le véhicule utilitaire (1) comprend une unité d'activation d'alarme (33B) configurée pour activer une alarme lorsque l'unité de jugement de prédicteur de renversement (33A) juge que chacun du châssis de véhicule avant (2) et du châssis de véhicule arrière (3) est dans l'état de prédicteur de renversement.

3. Le véhicule utilitaire selon la revendication 2, dans lequel
le châssis de véhicule arrière (3) comprend un châssis et un corps (8) capable de monter et de descendre par rapport au châssis, et
le véhicule utilitaire (1) comprend une unité de restriction de montée-et-descente de corps (33F) configurée pour restreindre un mouvement vers le haut et vers le bas du corps (8) lorsqu'un angle de roulis du châssis de véhicule arrière (3) détecté par l'unité de détection d'angle de roulis (28) est supérieur à une valeur prédéterminée.

4. Le véhicule utilitaire selon l'une quelconque des revendications 1 à 3, comprenant en outre :
une unité de restitution de quantité de fonctionnement d'accélérateur (33D) configurée pour procéder à une restitution à une quantité de fonctionnement du dispositif d'accélérateur (31A) opéré par l'opérateur après qu'une période de temps prédéterminée s'est écoulée depuis un achèvement d'un contrôle de décélération de chacun du dispositif de déplacement avant (5) et du dispositif de déplacement arrière (6) par l'unité de contrôle de puissance de moteur (33C).

5. Système de contrôle (30) d'un véhicule utilitaire (1) pour contrôler un véhicule utilitaire (1) comprenant un châssis de véhicule avant (2) et un châssis de véhicule arrière (3) connecté en rotation au châssis de véhicule avant (2), le système de contrôle (30) comprenant :
le véhicule utilitaire (1) selon l'une quelconque des revendications 1 à 4 ;
un dispositif d'identification d'opérateur (34A) configuré pour identifier un opérateur du véhicule utilitaire (1) ;
un dispositif de détection de position de véhicule (35A) configuré pour détecter une position de véhicule du véhicule utilitaire (1) ;
une unité de génération d'informations d'historique (33E) configurée pour générer des informations d'historique avec un horodatage lorsqu'une accélération du châssis de véhicule arrière (3) détectée par l'unité de détection d'état de véhicule devient une valeur prédéterminé ou supérieure ; et
une unité de génération d'informations d'historique (35C) configurée pour générer vers l'extérieur des informations de l'opérateur identifié par le dispositif d'identification d'opérateur (34A), la position de véhicule détectée par le dispositif de détection de position de véhicule (35A), et l'horodatage généré par l'unité de génération d'informations d'historique (33E) en association les uns avec les autres.
